# EUROPEAN PATENT SPECIFICATION

(11) **EP 0 709 249 B1**
(45) Date of publication and mention of the grant of the patent: **18.07.2001**
(21) Application number: 95307594.2
(22) Date of filing: 25.10.1995
(51) Int. Cl.: B60N 2/42, B60N 2/20

(54) **Vehicle seat**
Fahrzeugsitz
Siège de véhicule

(30) Priority: 26.10.1994 GB 9421542
(43) Date of publication of application: 01.05.1996
(73) Proprietor: Adwest Johnson Controls Ltd, Leamington Spa, Warwickshire CV34 6RH (GB)
(72) Inventor: Hyde Michael Paul c/o Adwest Johnson Controls Ltd, Leamington Spa, CV34 6RH.Warwickshire (GB)
(74) Representative: Dealtry, Brian

(56) References cited:
- WO-A-93/16895
- US-A- 5 290 089
- US-A- 5 366 268

## Description

The present invention relates to a vehicle seat.

A vehicle seat normally includes a seat cushion frame connected to a seat back frame. In the event of a vehicle being hit from the rear in an accident the seat back frame is exposed to a shock loading caused by the occupant of the seat being propelled in a rearward direction. If the shock loading is sufficiently high, the seat back frame will buckle and may be injurious to the occupant.

For a given impact on the rear of the vehicle the severity of the shock loading on the vehicle seat back is influenced by the size of the vehicle, viz for a large vehicle the shock loading would be less than that for a small vehicle.

When designing the frame structure of a vehicle seat back it is the usual practice to make the seat back only sufficiently robust to resist buckling by a shock loading to which it is expected to be exposed. Thus, seats intended for smaller vehicles tend to have seat back frames which are more robust than the seat back frames of seats intended for large vehicles.

Manufacturing more robust seat back frames is undesirable as it is expensive.

It is known from US 5290089 to pivotally connect the seat cushion frame to the seat back frame via a bracket. An energy absorber, in the form of a rod having a crumple zone, is provided. The rod is connected at opposite ends to parts of the bracket on opposite sides of the pivotal connection so that in the event of a rear impact on the vehicle, the crumple zone of the rod is crumpled and acts to limit the displacement of the cushion frame and back frame about said pivot.

A general aim of the present invention is to provide a vehicle seat which is constructed so as to absorb part of the shock loading applied to the vehicle seat back frame and thereby enable a less robust seat back frame to be used.

According to the present invention there is provided a vehicle seat having a seat back frame and a seat cushion frame, the back frame and cushion frame being connected to one another by bracket means characterised in that said bracket means comprises on each side of the seat a support arm which is attached to both frames, each support arm having at least one crumple zone which is arranged to crumple when the seat back frame is exposed to a rearwardly directed shock load exceeding a predetermined value and thereby permit limited rearward tilting of the back frame relative to the seat frame.

In one embodiment, each support arm includes a first arm portion connected to the back frame and a second arm portion connected to the cushion frame, said at least one crumple zone of each support arm being located to permit controlled bending of the first arm portion relative to the second arm portion of each support arm during said rearward tilting of the back frame.

In another embodiment, each support arm is fixedly attached to one frame and attached to the other frame by a pivot connection and a connection means positioned at a location spaced from said pivotal connection, said connection means being located adjacent said at least one crumple zone and co-operating therewith so as to cause the crumple zone to crumple when exposed to said rearwardly directed shock load to permit said arm to partially move about said pivotal connection and to thereby absorb part of said shock load.

Preferably the connection means comprise an anchor member fixedly secured to said other frame member, the anchor member projecting from said other frame member to be received in an opening formed in the arm, said crumple zone being located in the vicinity of the opening so as to be crumpled by the anchor member when the seat back frame is exposed to said shock load.

The anchor member may be fixedly held captive in the opening or may be releasably held captive in the opening by a movable latch member, the latch member when moved to an open position permitting the anchor member to move out of the opening and thereby enable the seat back frame to tilt forwardly about said pivotal connection.

The support arm may include a first arm portion pivotally connected to a second arm portion via an angularly adjustable seat reclining mechanism, the first arm portion being connected to said one of said frames and the second arm portion being connected to said other of said frames.

According to another aspect of the invention there is provided a bracket means as defined above for connecting a seat back frame to a seat cushion frame.

Various aspects of the invention are hereinafter described, with reference to the accompanying drawings, in which:-
Figure 1 is a diagrammatic side view of a vehicle seat according to an embodiment of the present invention;
Figure 2 is a more detailed side view of a vehicle seat according to a second embodiment of the present invention;
Figure 3 is a diagrammatic enlarged view of part of the second embodiment shown in Figure 2;
Figure 4 is a view similar to Figure 3 showing the second embodiment after experiencing said predetermined shock load;
Figure 5 is a view similar to Figure 3 showing a further embodiment of the invention;
Figure 6 is a similar view to Figure 3 showing a further embodiment of the invention;
Figure 7 is a similar view to Figure 2 showing a further embodiment of the invention.

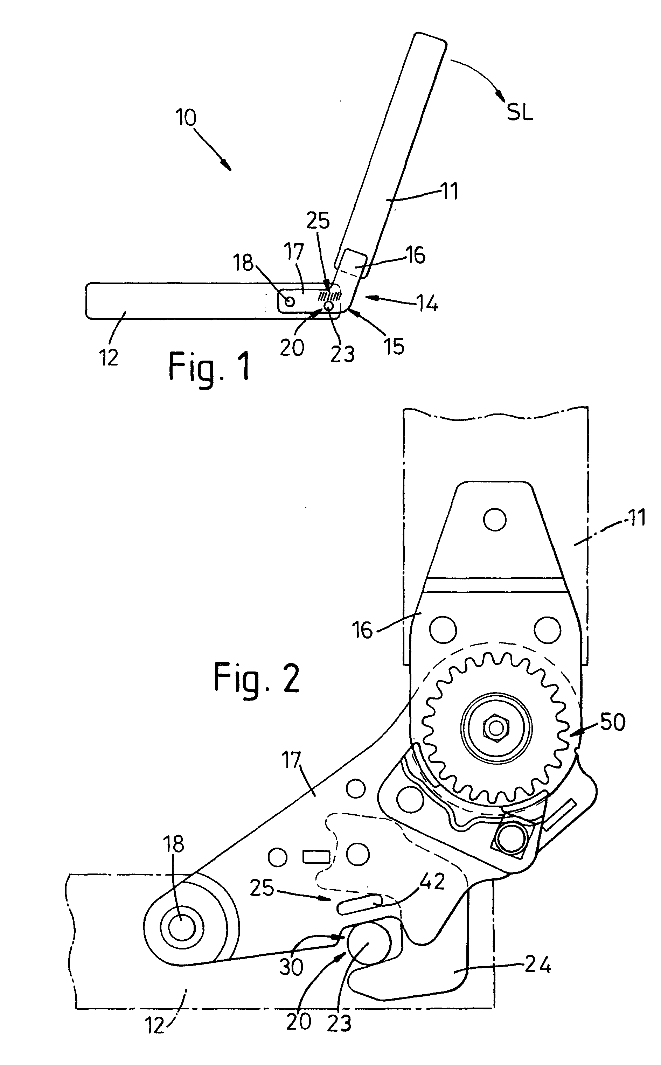

Referring initially to Figure 1 there is shown a vehicle seat 10 including a seat back frame 11 connected to a seat cushion frame 12 via a bracket means 14.

The bracket means 14 comprises, on each side of the seat, a cranked arm 15 defining an arm portion 16 and an arm portion 17. Arm portion 16 is fixedly secured to the seat back frame 11 by any known suitable means, eg rivets, bolts, welding etc.

Arm portion 17 is connected to the seat frame 12 via a pivotal connection 18 and a connection means 20 which under normal use prevents rotation of the arm portion 17 about the pivotal connection 18.

The connection means 20 preferably comprises an anchor member 23 fixedly attached to the seat frame 12 and which projects therefrom to be received in an opening 30 (not visible in Figure 1) formed in the arm portion 17. The anchor member 23 may be, for example, a shaft projecting laterally from frame 12. At least the arm portion 17 is of plate form, preferably formed from a metal plate and is adapted to have a crumple zone 25 which crumples when exposed to a load in excess of a predetermined shock load value which is applied in a direction SL causing the seat back frame 11 to tilt rearwardly.

When the crumple zone 25 crumples, the energy required to cause the crumpling reduces the shock loading applied to the seat back frame 11. Accordingly, the actual force applied to the seat back frame 11 which might cause buckling of the frame 11 is reduced.

In the embodiment illustrated in Figures 2 to 4, the anchor member 23 is located in an opening 30 in the form of an open sided recess and is held captive within the recess by a movable latch member 24.

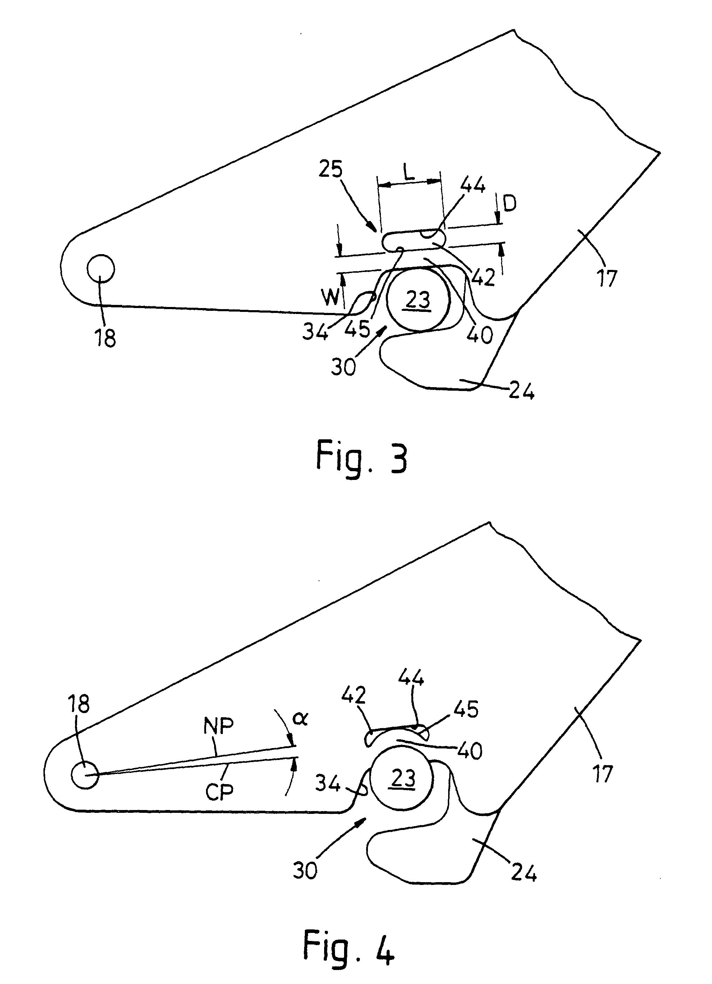

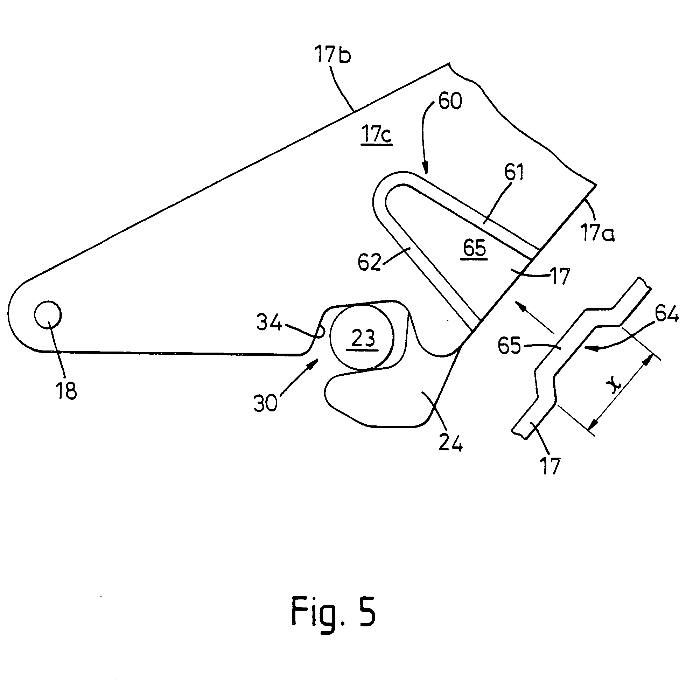

As best seen in Figures 3 and 4, the crumple zone 25 is preferably defined by a deformable strip portion 40 formed integrally within the arm portion 17 by virtue of an opening 42 in the shape of a slot which is located adjacent to opening 30.

The length L of the strip portion 40 and its width W will determine its resistance to deformation for a given thickness of metal plate forming the arm portion 17.

Accordingly, the degree of resistance to deformation can be easily changed by adjusting the length of the slot opening 42 and the distance of opening 42 from the recess opening 30.

Preferably the slot opening 42 is arranged so that the strip 40 extends in opposite directions for substantially the same distance from the point of tangential contact between the strip 40 and the anchor member 23.

When deformation occurs, the strip 40 is crumpled inwardly of the slot opening 42 and can continue until the opposed side faces 44, 45 of the slot opening abut against one another as shown in Figure 4.

When full deformation has occurred as illustrated in Figure 4, further deformation is not possible and the excess shock loading is transmitted to the seat back frame 11.

During deformation the arm portion 17 will move angularly about the pivotal connection 18 by an angle α from a normal use position NP to a fully deformed crash position CP.

It will be appreciated that the amount of angular movement through angle α may be varied by adjusting the distance D between faces 44, 45.

Once position CP has been reached loadings applied rearwardly to the seat back 11 are fully transmitted to the seat frame 12 via the bracket means 14 to thereby give full support to the occupant.

The latch 24 and opposed side 34 of the recess opening 30 are designed to have sufficient clearance relative to the anchor member 23 so as not to interfere with the movement of the anchor member 23 as it deforms the strip 40.

It will be appreciated that the strip 40 may be arcuate or straight and may have a varying cross-section along the length. Also the opening 42 defining slot may be differently shaped.

It will also be appreciated that provision of the opening 42 creates a weakness in the body of the arm portion 17 to permit crumpling of part of the body of the arm portion 17. Other ways of forming such a weakness are envisaged such as substituting the opening 42 by a surface recess in order to create a reduction in the thickness of the body of the arm portion 17.

As illustrated in Figure 2, arm portions 16, 17 are pivotally connected by a vehicle seat reclining mechanism 50. The mechanism 50 may be any conventional mechanism such as that described in our European Patent No. 0332340.

It will be appreciated that the mechanism 50 may be dispensed with and that the arm portions 16, 17 may be rigidly connected as in the embodiment of Figure 1.

In the further embodiment shown in Figure 5, the crumple zone comprises a deformable member in the form of a V-shaped recess or rib 60 having two arms 61, 62.

The rib 60 is defined by pressing a recess 64 into the arm portion 17. The recess 64, which defines the extent of the crumple zone, extends from one side edge 17a of the arm portion 17 towards the opposed side edge 17b. The recess 64 is spaced from side edge 17b to define a bending zone 17c.

The rib 60 is fitted to the arm portion 17 and is aligned substantially perpendicular to the direction SL of the shock load, as shown.

In use, when a predetermined shock loading is applied in the direction SL to cause the seat back frame 11 to tilt rearwardly, the arms 61, 62 of the rib 60 move towards one another reducing the dimension x. During this movement, the arm portion 17 bends about bend zone 17c and the bottom wall 65 of the recess 64 is bent outwardly. This absorbs part of the shock load and thus reduces the actual force applied to the seat back frame 11 which might otherwise cause it to buckle.

Since the arm portion 17 is bent about bend zone 17c, it does not move about pivot 18 during rearward tilting of the back frame 11.

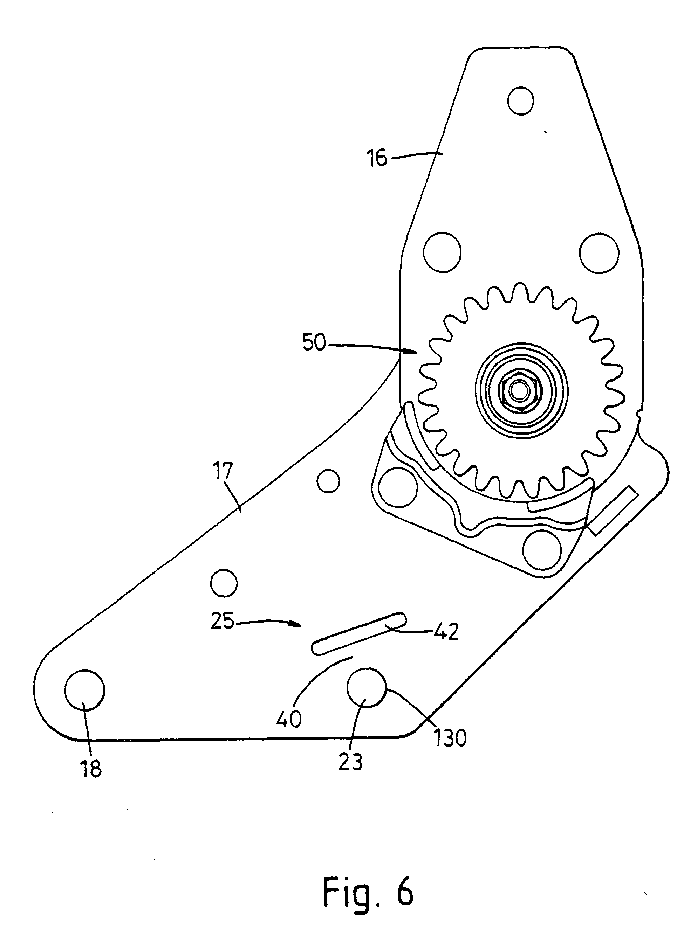

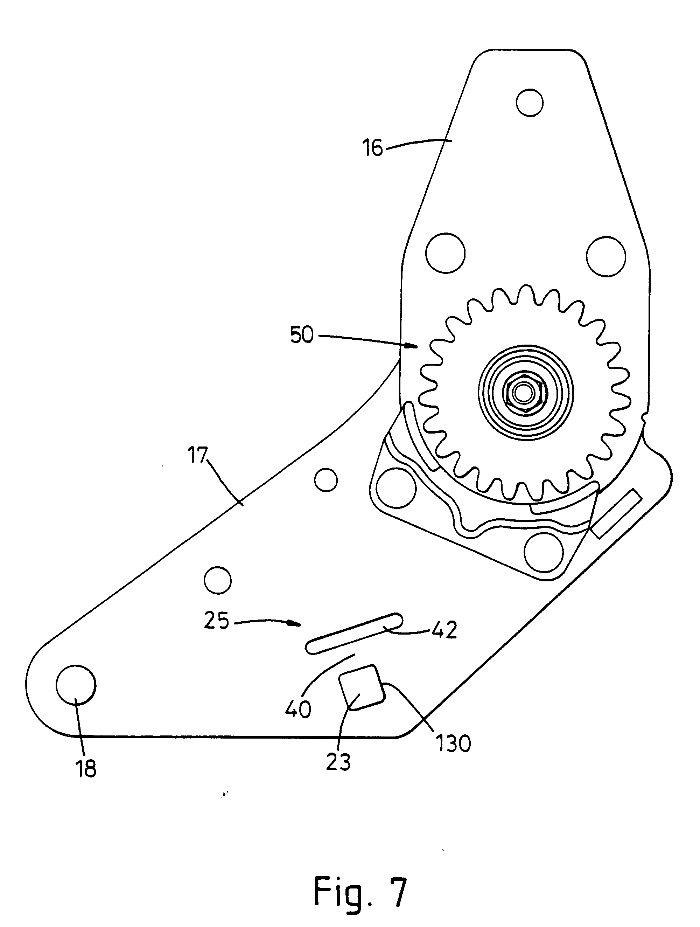

Two further embodiments are illustrated in Figures 6 and 7 wherein parts similar to those in the previous embodiments have been designated by the same reference numerals.

In Figures 6 and 7, the recess opening 30 is replaced by a closed opening 130 so that the arm portion 17 is fixedly secured to the seat frame 12 by virtue of the anchor member 23 being captively retained within the opening 130.

In Figure 6 the opening 130 is circular whereas in Figure 7 the opening 130 is square.

## Claims

1. A vehicle seat having a seat back frame (11) and a seat cushion frame (12), the back frame and cushion frame being connected to one another by bracket means (14) characterised in that said bracket means comprises on each side of the seat a support arm (15) which is attached to both frames (11, 12), each support arm having at least one crumple zone (25) which is arranged to crumple when the seat back frame is exposed to a rearwardly directed shock load exceeding a predetermined value and thereby permit limited rearward tilting of the back frame relative to the seat frame.

2. A vehicle seat according to Claim 1 wherein each support arm (15) includes a first arm portion (16) connected to the back frame (11) and a second arm portion (17) connected to the cushion frame (12), said at least one crumple zone of each support arm being located to permit controlled bending of the first arm portion (16) relative to the second arm portion (17) of each support arm during said rearward tilting of the back frame.

3. A vehicle seat according to claim 2 wherein for each support arm (15) one of said arm portions (17) is of plate-like form containing said at least one crumple zone, the crumple zone extending from one side edge (17a) of the arm portion (17) toward an opposed side edge (17b) of the arm portion, the crumple zone being spaced from the opposed side edge to define a plate bending zone (17c) about which the arm portion bends during deformation of the crumple zone.

4. A vehicle seat according to claim 3 wherein the crumple zone is defined by a V-shaped rib (60) pressed from the arm portion (17).

5. A vehicle seat according to claim 2, 3 or 4 wherein each arm is attached to one frame member by a pivot connection (18) and a connection means (20) spaced from the pivot connection (18), the connection means including an anchor member (23) projecting from said one frame member to be received in an opening (30) formed in the arm (15), the anchor member being releasably held captive in the opening (30) by a movable latch member (24), the latch member when moved to an open position permitting the anchor member (23) to move out of the opening (30) and thereby enable the seat back frame to tilt forwardly about said pivotal connection (18).

6. A vehicle seat according to claim 1 wherein each support arm (15) is fixedly attached to one frame (11) and attached to the other frame (12) by a pivot connection (18) and a connection means (20) positioned at a location spaced from said pivotal connection (18), said connection means being located adjacent said at least one crumple zone (25) and co-operating therewith so as to cause the crumple zone to crumple when exposed to said rearwardly directed shock load to permit said arm (15) to partially move about said pivotal connection (18) and to thereby absorb part of said shock load.

7. A vehicle seat according to claim 6 wherein the connection means comprise an anchor member (23) fixedly secured to said other frame member (12), the anchor member (23) projecting from said other frame member (12) to be received in an opening (30) formed in the arm (15), said crumple zone (25) being located in the vicinity of the opening (30) so as to be crumpled by the anchor member (23) when the seat back frame is exposed to said shock load.

8. A vehicle seat according to claim 7 wherein the anchor member (23) is fixedly held captive within the opening (130).

9. A vehicle seat according to claim 7 wherein the anchor member (23) is releasably held captive in the opening (30) by a movable latch member (24), the latch member (24) when moved to an open position permitting the anchor member (24) to move out of the opening (30) and thereby enable the seat back frame (11) to tilt forwardly about said pivotal connection (18).

10. A vehicle seat according to claim 8 or 9 wherein the crumple zone (25) is defined by an aperture (42) in the support arm (15) located adjacent to the opening (30, 130) and spaced therefrom to define a deformable strip (40) which is deformed by said anchor member (23) during said rearward tilting of the back frame (11).

11. A vehicle seat according to any preceding claim wherein each support arm (15) comprises a first arm portion pivotally connected to a second arm portion via an angularly adjustable seat reclining mechanism (50), the first arm portion (16) being connected to one of said frames (11, 12) and the second arm portion (17) being connected to the other of said frames (11, 12).

## Patentansprüche

1. Fahrzeugsitz mit einem Sitz-Rückenlehnenrahmen (11) und einem Sitzpolsterrahmen (12), wobei der Rückenlehnenrahmen und der Sitzrahmen miteinander durch eine Halterungs- bzw. Klammereinrichtung (14) verbunden sind, dadurch gekennzeichnet, daß die Halterungs- bzw. Klammereinrichtung auf jeder Seite des Sitzes einen Stützarm (15) umfaßt, der an beiden Rahmen (11,12) angebracht ist, wobei jeder Stützarm mindestens eine Knautschzone (25) aufweist, die so angeordnet ist, daß sie zerknautscht wird, wenn der Sitz-Rückenlehnenrahmen einer rückwärts gerichteten Stoßbelastung ausgesetzt ist, die einen vorbestimmten Wert überschreitet und dadurch ein begrenztes Rückwärtskippen bzw. -schwenken des Rückenlehnenrahmens relativ zum Sitzrahmen ermöglicht.

2. Fahrzeugsitz gemäß Anspruch 1, wobei jeder Stützarm (15) einen mit dem Rückenlehnenrahmen (11) verbundenen ersten Armabschnitt (16) und einen mit dem Sitzpolsterrahmen (12) verbundenen zweiten Armabschnitt (17) umfaßt, wobei die mindestens eine Knautschzone jedes Stützarms so gelegen ist, daß sie ein kontrolliertes Biegen des ersten Armabschnitts (16) in bezug auf den zweiten Armabschnitt (17) jedes Stützarms bei dem Rückwärtskippen bzw. -schwenken des Rückenlehnenrahmens ermöglicht.

3. Fahrzeugsitz gemäß Anspruch 2, wobei bei jedem Stützarm (15) einer der Armabschnitte (17) von plattenartiger Form ist, die die mindestens eine Knautschzone aufweist, wobei sich die Knautschzone von einer Seitenkante (17a) des Armabschnitts (17) zu einer gegenüberliegenden Seitenkante (17b) des Armabschnitts erstreckt und die Knautschzone von der gegenüberliegenden Seitenkante beabstandet ist, um eine Platten-Biegezone (17c) festzulegen, um die sich der Armabschnitt bei Verformung der Knautschzone biegt.

4. Fahrzeugsitz gemäß Anspruch 3, wobei die Knautschzone durch eine V-förmige Rippe (60), die vom Armabschnitt (17) gedrückt wird, festgelegt ist.

5. Fahrzeugsitz gemäß Anspruch 2, 3 oder 4, wobei jeder Arm an einem Rahmenelement durch eine Gelenkverbindung (18) und ein von der Gelenkverbindung (18) beabstandetes Verbindungsmittel (20) angebracht ist, wobei das Verbindungsmittel ein Verankerungselement (23) aufweist, das von dem einen Rahmenelement vorsteht, um in einer in dem Arm (15) ausgebildeten Öffnung (30) aufgenommen zu werden, wobei das Verankerungselement durch ein bewegliches Verriegelungselement (24) lösbar in der Öffnung (30) festgehalten wird und das Verriegelungselement, wenn es in eine Öffnungsposition bewegt wird, dem Verankerungselement (23) gestattet, sich aus der Öffnung (30) herauszubewegen und dadurch ein Vorwärtskippen bzw. -schwenken des Rückenlehnenrahmens um die Gelenkverbindung (18) zu ermöglichen.

6. Fahrzeugsitz gemäß Anspruch 1, wobei jeder Stützarm (15) an einem Rahmen (11) fest angebracht ist und an dem anderen Rahmen (12) durch eine Gelenkverbindung (18) und ein an einer von der Gelenkverbindung (18) beabstandeten Stelle positioniertes Verbindungsmittel (20) angebracht ist, wobei das Verbindungsmittel neben der mindestens einen Knautschzone (25) gelegen ist und mit dieser zusammenwirkt, um ein Zerknautschen der Knautschzone zu bewirken, wenn diese einer rückwärtsgerichteten Stoßbelastung ausgesetzt ist, um es dem Arm (15) zu ermöglichen, sich teilweise um die Gelenkverbindung (18) herum zu bewegen und dadurch einen Teil der Stoßbelastung abzufangen.

7. Fahrzeugsitz gemäß Anspruch 6, wobei das Verbindungsmittel ein an dem anderen Rahmenelement (12) fest festgelegtes Verankerungselement (23) umfaßt, wobei das Verankerungselement (23) von dem anderen Rahmenelement (12) vorsteht, um in einer in dem Arm (15) ausgebildeten Öffnung (30) aufgenommen zu werden, und wobei die Knautschzone (25) in der Umgebung der Öffnung (30) gelegen ist, so daß sie durch das Verankerungselment (23) zerknautscht wird, wenn der Sitz-Rückenlehnenrahmen der Stoßbelastung ausgesetzt ist.

8. Fahrzeugsitz gemäß Anspruch 7, wobei das Verankerungselement (23) fest in der Öffnung (30) festgehalten wird.

9. Fahrzeugsitz gemäß Anspruch 7, wobei das Verankerungselement (23) durch ein bewegliches Verriegelungselement (24) lösbar in der Öffnung (30) festgehalten wird und das Verriegelungselement (24), wenn es in eine Öffnungsposition bewegt wird, dem Verankerungselement (24) bzw. (23) gestattet, sich aus der Öffnung (30) herauszubewegen und dadurch ein Vorwärtskippen bzw. - schwenken des Sitz-Rückenlehnenrahmens (11) um die Gelenkverbindung (18) zu ermöglichen.

10. Fahrzeugsitz gemäß Anspruch 8 oder 9, wobei die Knautschzone (25) durch eine Öffnung (42) in dem Stützarm (15) festgelegt ist, die neben der Öffnung (30,130) liegt und von dieser beabstandet ist, um einen verformbaren Streifen (40) festzulegen, der bei dem Rückwärtskippen bzw. -schwenken des Rückenlehnenrahmens (11) durch das Verankerungselement (23) verformt wird.

11. Fahrzeugsitz gemäß einem der vorangehenden Ansprüche, wobei jeder Stützarm (15) einen ersten Armabschnitt umfaßt, der mit einem zweiten Armabschnitt über einen im Winkel verstellbaren Sitz-Zurückneigemechanismus (50) gelenkig verbunden ist, wobei der erste Armabschnitt (16) mit einem der Rahmen (11,12) und der zweite Armabschnitt (17) mit dem anderen der Rahmen (11,12) verbunden ist.

## Revendications

1. Siège de véhicule comportant un châssis de dossier de siège (11) et un châssis de coussin de siège (12), le châssis de dossier et le châssis de coussin étant reliés l'un à l'autre par des moyens de support (14) caractérisé en ce que lesdits moyens de support comprennent de chaque côté du siège un bras de support (15) qui est fixé sur les deux châssis (11, 12), chaque bras de support comportant au moins une zone déformable (25) qui est aménagée de manière à se déformer, lorsque le châssis de dossier de siège est soumis à un choc dirigé vers l'arrière qui dépasse une valeur prédéterminée et permet ainsi de limiter le basculement vers l'arrière du châssis de dossier par rapport au châssis de coussin.

2. Siège de véhicule selon la revendication 1 dans lequel chaque bras de support (15) comprend une première partie de bras (16) reliée au châssis de dossier (11) et une seconde partie de bras (17) reliée au châssis de coussin (12), ladite au moins une zone deformable de chaque bras de support étant située de manière à permettre une commande de la flexion de la première partie de bras (16) par rapport à la seconde partie de bras (17) de chaque bras de support au cours dudit basculement vers l'arrière du châssis de dossier.

3. siège de véhicule selon la revendication 2 dans lequel, pour chaque bras de support (15), l'une desdites parties de bras (17) est en forme de plaque contenant ladite au moins une zone déformable, la zone déformable s'étendant à partir d'un bord latéral (17a) de la partie de bras (17) vers un bord latéral opposé (17b) de la partie de bras, la zone déformable étant séparée du bord latéral opposé afin de définir une zone de flexion de plaque (17c) autour de laquelle la partie de bras est fléchie au cours de la déformation de la zone déformable.

4. Siège de véhicule selon la revendication 3 dans lequel la zone déformable est définie par une nervure en forme de V (60) formée à la presse à partir de la partie de bras (17).

5. Siège de véhicule selon les revendications 2, 3 ou 4 dans lequel chaque bras est fixé sur un élément de châssis à l'aide d'une connexion en pivot (18) et des moyens de connexion (20) séparés de la connexion en pivot (18), les moyens de connexion comprenant un élément d'ancrage (23) en saillie à partir dudit un élément de châssis afin d'être reçu dans une ouverture (30) formée dans le bras (15), l'élément d'ancrage étant retenu de manière amovible dans l'ouverture (30) par un élément de verrou mobile (24), l'élément de verrou permettant, lorsqu'il est déplacé en position ouverte, la sortie de l'élément d'ancrage (23) de l'ouverture (30) et permet ainsi le basculement du châssis de dossier vers l'avant autour de ladite connexion en pivot (18).

6. Siège de véhicule selon la revendication 1 dans lequel chaque bras de support (15) est solidement fixé sur un châssis (11) et fixé sur l'autre châssis (12) à l'aide d'une connexion en pivot (18) et de moyens de connexion (20) situés à un emplacement séparé de ladite connexion en pivot (18), lesdits moyens de connexion étant situés à proximité de ladite au moins une zone déformable (25) et coopérant avec celle-ci de manière à provoquer la déformation de la zone déformable, lorsqu'elle est soumise au dit choc dirigé vers l'arrière et à permettre un déplacement partiel dudit bras (15) autour de ladite connexion en pivot (18) et à amortir ainsi une partie dudit choc.

7. Siège de véhicule selon la revendication 6 dans lequel les moyens de connexion comprennent un élément d'ancrage (23) solidement fixé sur ledit autre élément de châssis (12), l'élément d'ancrage (23) étant en saillie à partir dudit autre élément de châssis (12), afin d'être reçu dans une ouverture (30) formée dans le bras (15), ladite zone déformable (25) étant située à proximité de l'ouverture (30) de manière à être déformée par l'élément d'ancrage (23) lorsque le châssis de dossier de siège est soumis au dit choc.

8. Siège de véhicule selon la revendication 7 dans lequel l'élément d'ancrage (23) est solidement retenu à l'intérieur de l'ouverture (130).

9. Siège de véhicule selon la revendication 7 dans lequel l'élément d'ancrage (23) est retenu de manière amovible dans l'ouverture (30) par un élément de verrou mobile (24), l'élément de verrou (24), lorsqu'il est déplacé en position ouverte, permettant la sortie de l'élément d'ancrage (23) de l'ouverture (30) et ainsi le basculement du châssis de dossier de siège (11) vers l'avant autour de ladite connexion en pivot (18).

10. Siège de véhicule selon la revendication 8 ou la revendication 9 dans lequel la zone déformable (25) est définie par une ouverture (42) aménagée dans le bras de support (15) située à proximité de l'ouverture (30, 130) et séparée de celle-ci afin de définir une bande déformable (40) qui est déformée par ledit élément d'ancrage (23) au cours dudit basculement vers l'arrière du châssis de dossier (11).

11. Siège de véhicule selon l'une quelconque des revendications précédentes dans lequel chaque bras de support (15) comprend une première partie de bras connectée en pivotement à une seconde partie de bras par l'intermédiaire d'un mécanisme d'inclinaison de dossier de siège à angle réglable (50), la première partie de bras (16) étant reliée à l'un desdits châssis (11, 12) et la seconde partie de bras (17) étant reliée à l'autre desdits châssis (11, 12).
